# EUROPEAN PATENT SPECIFICATION

(11) **EP 1 714 204 B1**
(45) Date of publication and mention of the grant of the patent: **19.10.2011**
(21) Application number: 05710155.2
(22) Date of filing: 07.02.2005
(51) Int. Cl.: G06F 21/00

(54) **LICENSE INFORMATION MANAGEMENT APPARATUS AND LICENSE INFORMATION MANAGEMENT METHOD**
LIZENZINFORMATIONS-VERWALTUNGSVORRICHUTNG UND LIZENZINFORMATIONS-VERWALTUNGSVERFAHREN
APPAREIL DE GESTION D'INFORMATIONS DE LICENCE ET PROCEDE DE GESTION D'INFORMATIONS DE LICENCE

(30) Priority: 09.02.2004 JP 2004032676
(43) Date of publication of application: 25.10.2006
(73) Proprietor: Panasonic Corporation, Kadoma-shi Osaka 571-8501 (JP)
(72) Inventor: OHMORI, Motoji, Osaka 571-8501 (JP); NAKANO, Toshihisa, Osaka 571-8501 (JP); HARADA, Shunji, Osaka 571-8501 (JP); YAMAMOTO, Masaya, Osaka 571-8501 (JP); OKAMOTO, Ryuichi, Osaka 571-8501 (JP)
(74) Representative: Pautex Schneider, Nicole Véronique
(86) International application number: PCT/JP2005/002110
(87) International publication number: WO 2005/076106

(56) References cited:
- EP-A- 1 286 243
- EP-A1- 1 233 569
- US-A1- 2003 069 849
- TAIMA K: "Can We Ever Charge Napster Users?" IEEE MULTIMEDIA, IEEE COMPUTER SOCIETY, US, October 2002 (2002-10), pages 76-81, XP002309104 ISSN: 1070-986X

## Description

### Technical Field

The present invention relates to a management apparatus of license information which defines key information, reproduction conditions and the like for reproducing encrypted digital contents and the like and to the management method thereof, in particular to a technology of managing the license information while securing tamper resistance.

### Background Art

In recent years, a distribution of content (e.g. video, audio, program soft, etc.) using a network such as a broadband has been widely available. Further, a content distribution using a Blue ray Disc-Record Only Memory (BD-ROM) package has been under the review. In general, the content is encrypted so that a user needs to obtain a decryption key corresponding to the content. Furthermore, the use of content is most likely to be restricted based on the premise of fee payment. Therefore, the user needs to use the content in accordance to predetermined license information (e.g. license ticket). Here, the "license ticket" is information including "content reproduction condition information" which defines a condition for restricting the use of content and an encrypted "content key" which is a key for decrypting a received content. The "content reproduction condition information" is, for example, information for defining a date, total amount of time and the number of times that are available for reproduction.

Therefore, a strict management is required for the license ticket. In general, the license ticket is stored in an area (tamper resistant area) in which it cannot be rewritten unless a permission is given (e.g. refer to Japanese Laid-Open Patent application No. H01-194029).

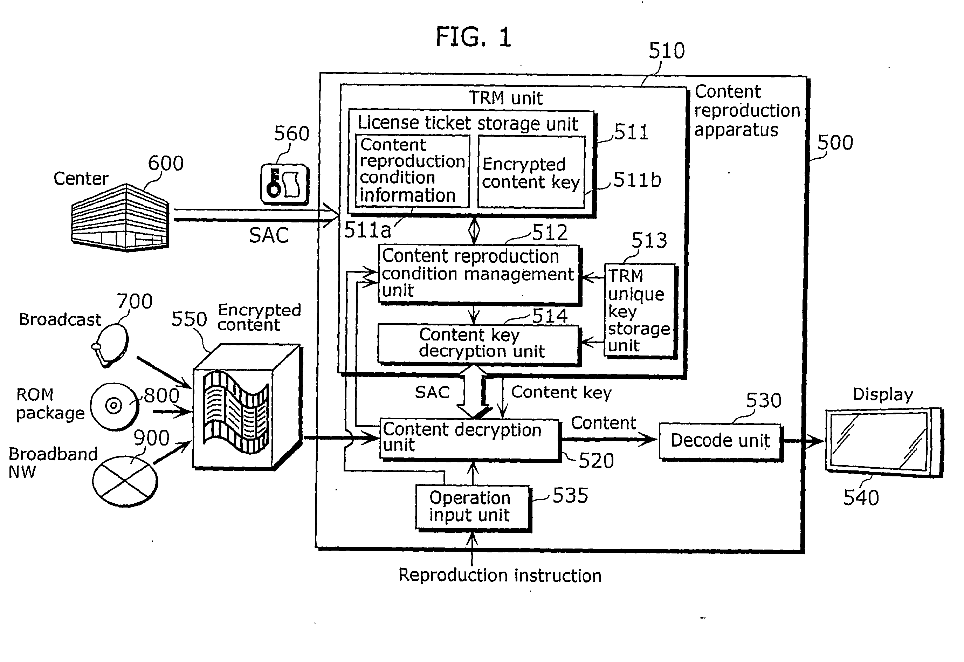

FIG. 1 is a block diagram showing a functional structure of a content reproduction apparatus 500 according to a conventional technology. The content reproduction apparatus 500 is an apparatus which manages a license ticket necessary for reproducing (using) the encrypted content (e.g. in the case of BS digital broadcast, a scramble key, a work key and a master key are used for encrypting the content.), while securing tamper resistance. It includes a tamper resistance module unit (hereafter, referred to as "TRIM unit") 510, a content decryption unit 520, a decode unit 530, and an operation input unit 535. Note that, the content reproduction apparatus 500 may have a communication control unit and the like that is connected to an external network and controls transmitting and receiving data.

The TRM unit 510 is composed of, for example, an IC card having tamper resistance and manages the license ticket. It includes a license storage unit 511 which holds content reproduction condition information 511a and an encrypted content key 511b, a content reproduction condition management unit 512 which controls a content reproduction based on the content reproduction condition information 511a, a TRM unique key storage unit 513 which holds a unique key and the like used in the TRM unit 510, and a content key decryption unit 514 which decrypts the content key using the TRM unique key.

The content decryption unit 520 decrypts a content 550 encrypted with the content key decrypted by the content key decryption unit 514.

The decode unit 530 decodes the content decrypted by the content decryption unit 520 into data which can be displayed to a display 540. The operation input unit 535 is, for example, a switch, a remote control and the like, receives an operation such as "reproduced" from a user and notifies the content decryption unit 520 and the content reproduction condition management unit 512.

An operation of the content reproduction apparatus 500 is as follows.

First, the TRM unit 510 (IC card) obtained from a center 600 is inserted to a card insertion slot and the like (not shown in the diagram) of the content reproduction apparatus 500. When receiving a reproduction instruction from a user via the operation input unit 535, the content reproduction condition management unit 512 specifies a content instructed to be reproduced and, from the license ticket storage unit 511, content reproduction condition information 511a of the license ticket corresponding to the content, and decodes the details. Further, the content reproduction condition management unit 512 judges whether or not the details of the content reproduction condition information 511a are the condition which can be permitted for reproducing the content. When the reproduction is permitted, the content reproduction condition management unit 512 reads out the encrypted content key 511b stored in the license ticket storage unit 511 and transmits to the content key decryption unit 514. The content key decryption unit 514 reads out the TRM unique key from the TRM unique key storage unit 513, decrypts the encrypted content key 511b, and transmits the encrypted content key 511b to the content decryption unit 520. The content decryption unit 520 decrypts the content based on the decrypted content key received from the content key decryption unit 514, and transmits the decrypted content to the decode unit 530.

Further, the content decryption unit 520 transmits information concerning a reproduction of the content (e.g. content name, reproduction starting date, reproduction ending date, etc.) to the content reproduction condition management unit 512. Consequently, the content reproduction condition management unit 512 changes the details of the content reproduction condition Information" 511a corresponding to the reproduced content, and overwrites on the license ticket storage unit 511. Here, the content key decryption unit 514 and the content decryption unit 520 are connected to each other by a Secure Authentication Channel (SAC).

As described in the above, the content reproduction apparatus 500 manages the license ticket that is reproduction condition Information while securing tamper resistance.

However, the license ticket takes a form of "one content one license ticket" to make a distribution of fee easier. When one user possesses a large amount of contents, the number of license tickets accordingly increases as well as an amount of data according to the license tickets. Consequently, it is necessary to have a TRM unit having mass storage increasing the costs of the content reproduction apparatus and causing a decrease of competitiveness.

Accordingly, an object of the present invention is to provide a license management apparatus and a license information management method which do not require the TRM unit having mass storage even in the case where the user possesses a large amount of contents.

The document EP1233569 discloses a system wherein an tamper resistant module controls access to licence information and integrity of licence information and updates thereto. A part of the licence information may be stored in an unprotected memory in an encrypted form and a part in the tamper resistant module. Licence information updates according to the consumption of the content are performed within the tamper resistant module.

The European patent application EP 1 286 243 A2 discloses a license information management apparatus which manages license information indicating a range in which digital content can be used, said apparatus comprising: a data management unit operable to manage license information while ensuring security of the license information; and a storage unit operable to hold the license information whose security is ensured, wherein said data management unit includes: a secret key holding subunit operable to hold a secret key; and a reproduction condition management subunit operable to encrypt the license information with the secret key, and to transfer the encrypted license information to said storage unit.

**Disclosure of Invention** The present invention is defined in the appended independent claims.

In order to achieve the object, the license information management apparatus according to present invention is a license information management apparatus which manages license information indicating a range in which digital content can be used, said apparatus comprising: a data management unit operable to manage license information while ensuring security of the license : information; and a storage unit operable to hold the license information whose security is ensured, wherein said data management unit includes: a secret key holding subunit operable to hold a secret key; and a reproduction condition management subunit operable to encrypt the license information with the secret key, and to transfer the encrypted license information to said storage unit.

Accordingly, the license information (e.g. license ticket) conventionally stored in said data management unit (e.g. IC card etc.) having tamper resistance is stored into said storage unit (e.g. secure flash unit) so that storage memory in said data management unit is restrained to minimum.

Also, said reproduction condition management subunit further includes: a reading subunit operable to read out the encrypted license information and the secret key respectively from said storage unit and said secret key holding unit; a decryption subunit operable to decrypt the read license information; an information update subunit operable to update the decrypted license information in accordance with a use of digital content; and an overwriting subunit operable to encrypt the updated license information with the secret key and overwrite in said storage unit.

Said storage unit further includes a signature data storage unit operable to hold data indicating a digital signature applied to a correspondence table indicating a correspondence between identification information which can identify the license information and information indicating an update history of the license information, said data management unit further includes a correspondence table storage unit operable to hold the correspondence table, and said reproduction condition management unit is further operable to verify validity of the license information based on the data to which a digital signature is applied stored in said signature data storage unit and the correspondence table stored in said correspondence table storage unit.

Consequently, the license information is stored in said storage unit and validity of the license ticket is examined based on a correspondence table in which information which can identify the license ticket (e.g. LT_ID) and information indicating update history of the license information (e.g. the number of update times) are associated with each other. Therefore, in addition to limit the storage memory of the storage unit to the minimum, the license information can be managed with higher security.

Note that the present invention can be realized as a license information management method having characteristic constituents of the license information management apparatus as steps, or as a program causing a personal computer and the like to execute the steps. Also, not to mention that the program can be widely distributed via a recording medium such as DVD or a transmission medium such as the Internet.

Accordingly, a delivery and circulation of digital copyrighted works via a digital broadcast, package soft, network and the like are encouraged. In a present time when a proper copyright protection is requested, the practical value of the present invention is very high. As further information about technical background to this application, the disclosure of Japanese Patent Application No. 2004-032676 filed on February 9, 2004.

### Brief Description of Drawings

These and other objects, advantages and features of the invention will become apparent from the following description thereof taken in conjunction with the accompanying drawings that illustrate a specific embodiment of the invention. In the

Drawings:
FIG. 1 is a block diagram showing a functional structure of a content reproduction apparatus according to conventional technology.
FIG. 2 is a block diagram showing a functional structure of the content reproduction apparatus according to the first embodiment.
FIG. 3 is a diagram showing a functional structure of a content reproduction condition management unit in the first embodiment.
FIG. 4 is a flowchart showing a process of content reproduction condition management unit in the first embodiment.
FIG. 5 is a diagram for explaining a challenge of the content reproduction apparatus in the first embodiment.
FIG. 6 is a block diagram showing a functional structure of a content reproduction apparatus according to the second embodiment.
FIG. 7 is a block diagram showing a functional structure of a content reproduction condition management unit in the second embodiment.
FIG. 8 is a diagram showing an example of a correspondence table in the second embodiment.
FIG. 9 is a flowchart showing a process of the content reproduction condition management unit in the second embodiment.

### Best Mode for Carrying Out the Invention

Hereafter, it is explained in detail about embodiments according to the present invention with reference to drawings.

### (First Embodiment)

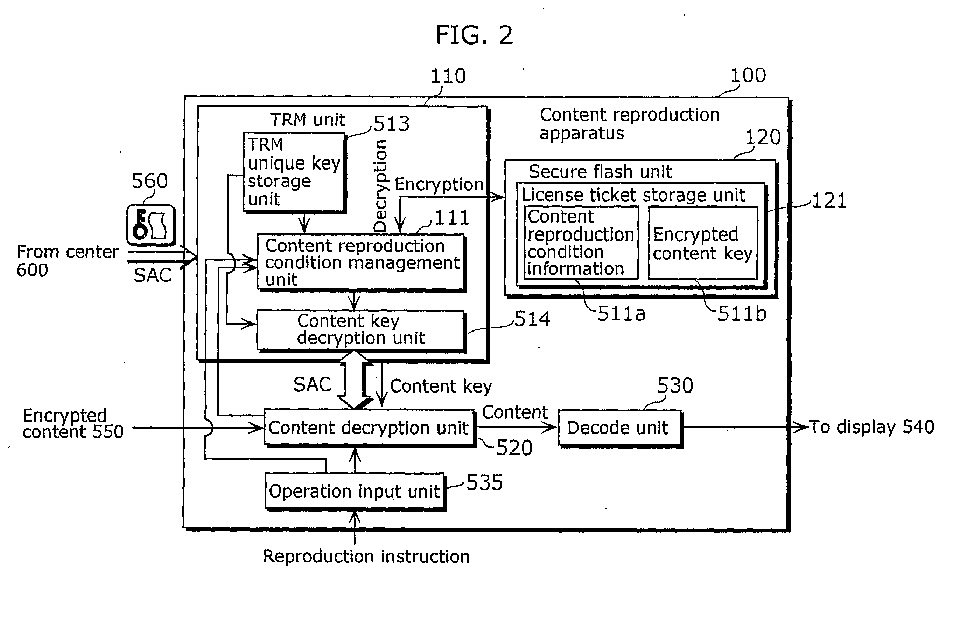

FIG. 2 is a block diagram showing a functional structure of a content reproduction apparatus 100 according to the present embodiment. The content reproduction apparatus 100 in FIG. 2 is an apparatus that manages a license ticket (hereafter referred to as "LT") necessary for reproducing (using) an encrypted content, while securing tamper resistance. It includes a TRM unit 110, a secure flash unit 120, a content decryption unit 520, a decode unit 530 and an operation input unit 535. Note that, the content reproduction apparatus 100 may have a communication control unit (not shown in the diagram) that is connected to an external network and controls transmitting and receiving of data.

Here, in the content reproduction apparatus 100, same marks are attached to same functional structures as in the conventional content reproduction apparatus 500. Also, descriptions about the same structures are omitted in here.

The TRM unit 110 is, for example an IC card with tamper resistance, having a content reproduction condition management unit 111, a TRM unique key storage unit 513 and a content key decryption unit 514. Here, the TRM unit is an example of a data control unit.

The content reproduction condition management unit 111 is a section where controls the TRM unit 110 as a whole, updates the content reproduction information 511a corresponding to the content every time when the content is reproduced by the user, while encrypting a license ticket corresponding to the encrypted content 550 obtained via the center 600 and storing into the secure flash unit 120.

The secure flash unit 120 is, for example a general flash memory. However, it has a characteristic that a encryption/decryption is performed with the TRM unique key in the case of writing or reading the license ticket corresponding to the content 550 (i.e. the content reproduction condition information511a and the encrypted content key 511b). Specifically, the content reproduction condition management unit 111 decrypts the license ticket read out from the secure flash unit 120 using the TRM unique key stored in the TRM unique key storage unit 513. Also, it encrypts the updated license ticket using the TRM unique key and writes into the secure flash unit 120. Here, the secure flash unit is an example of a storage unit.

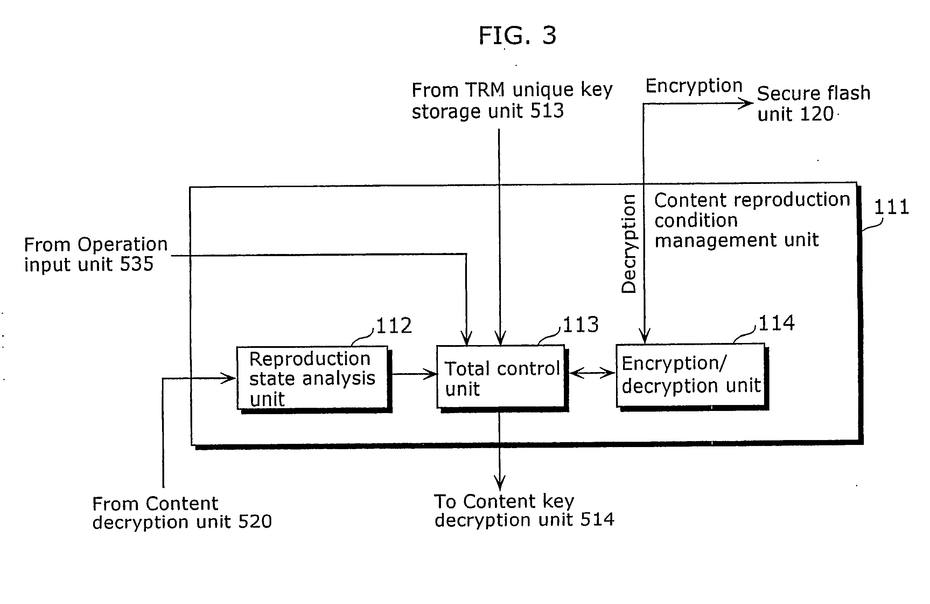

FIG. 3 is a block diagram showing a functional structure of the content reproduction condition management unit 111. As shown in FIG. 3, the content reproduction condition management unit 111 has a reproduction state analysis unit 112, a total control unit 113 and an encryption/decryption unit 114.

The reproduction state analysis unit 112 receives information concerning the content reproduction (e.g. content name, reproduction starting date, reproduction ending date, etc.) from the content decryption unit 520, generates reproduction state information indicating a reproduction state of the content based on the information, and notifies the total control unit 113 of the generated reproduction state information.

The total control unit 113 controls the content reproduction condition management unit 111 as a whole, being, for example, a microcomputer having a ROM and RAM. The total control unit 113 updates and encrypts the content reproduction condition information 511a read out via the encryption/decryption unit 114, and instructs the encryption/decryption unit to overwrite on the secure flash unit 120, based on the reproduction state information received from the reproduction state analysis unit 112. Further, the total control unit 113 reads the TRM unique key stored in the TRM unique key storage unit 513 if necessary and transmits to the encryption/decryption unit 114 and the content key decryption unit 514. Furthermore, the total control unit 113 controls timing of an encryption process or a decryption process in the encryption/decryption unit 114.

In addition, when detecting that the IC card is inserted to the card insertion slot and a license ticket is newly purchased, the total control unit 113 temporary stores the purchased license ticket into the internal RAM and the like. After that, it transfers the license ticket again to the secure flash unit 120 (i.e. storing a new license ticket into the secure flash unit 120 and deleting the license ticket inside the IC card).

Here, as described in the above, it is not limited to the method of detecting that the IC card has been inserted to the card insertion slot, and transferring the newly purchased license ticket to the secure flash unit 120. The license ticket may be obtained using the communication control unit (not shown in the diagram) and the total control unit 113 may detect and transfer to the secure flash unit 120.

The encryption/decryption unit 114, based on the instruction by the total control unit 113, performs reading and decryption process, or encrypting process and writing on the content reproduction condition information 511a for the secure flash unit 120.

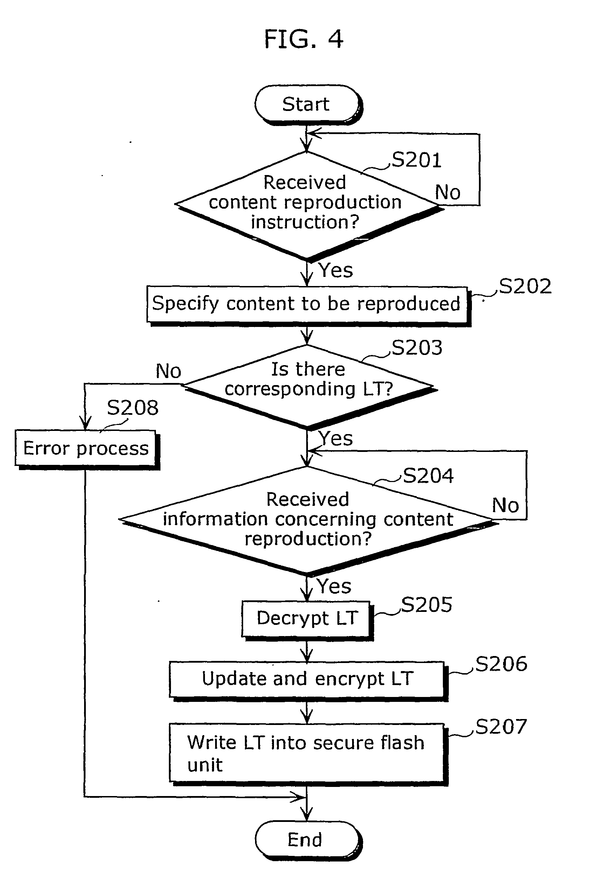

FIG. 4 is a flowchart showing a flow of process in the content reproduction condition management unit 111 shown in FIG. 3.

First, when receiving the instruction to reproduce the content from the user (S201: Yes), the total control unit 113 specifies a content corresponding to the reproduction instruction (S202) via the content decryption unit 520 and the operation input unit 535.

Next, the total control unit 113 verifies whether or not there is a license ticket corresponding to the specified content (i.e. the license ticket has been purchased) (S203). In the case where it is verified, similar to the case of the conventional technology, the total control unit 113 decrypts the content key, and transmits to the content decryption unit 520.

As the method of verifying whether there is the license ticket or not, for example, there is a method of holding information that can identify the license ticket (e.g. ID of license ticket is referred to as "LT_ID") into the RAM inside the total control unit 113 when the newly purchased license ticket is transferred to the secure flash unit 120, and of verifying whether there is the LT_ID corresponding to the content inside the total control unit 113. If there is no license ticket (S203: No), the total control unit 113 executes an error process (S208).

After that, the total control unit 113 receives information relating to the reproduction of the content from the content decryption unit 520 (S204: Yes), and instructs the encryption/decryption unit 114 to decrypt the license ticket stored in the secure flash unit 120 using the TRM unique key stored in the TRM unique key storage unit 513 (S205).

Further, the total control unit 113 updates details of the content reproduction condition information 511a of the decrypted license ticket, and instructs the encryption and decryption unit 114 to re-encrypt using the TRM unique key (S206). Consequently, the encryption/decryption unit 114 encrypts the updated license ticket and overwrites on the secure flash unit 120 (S207).

As described in the above, according to the content reproduction apparatus in the present embodiment, the license ticket stored in the conventional TRM unit (IC card with tamper resistance) is stored in the secure flash unit so that a storage memory of the TRM unit can be restrained to the minimum.

### (Second Embodiment)

In the first embodiment, it is explained an example that the license ticket corresponding to the content is stored in the secure flash unit and an increase of the storage memory of the TRM unit is prevented. In this embodiment, it is explained further an example to prevent the license ticket stored in the secure flash unit to be rewritten without permission.

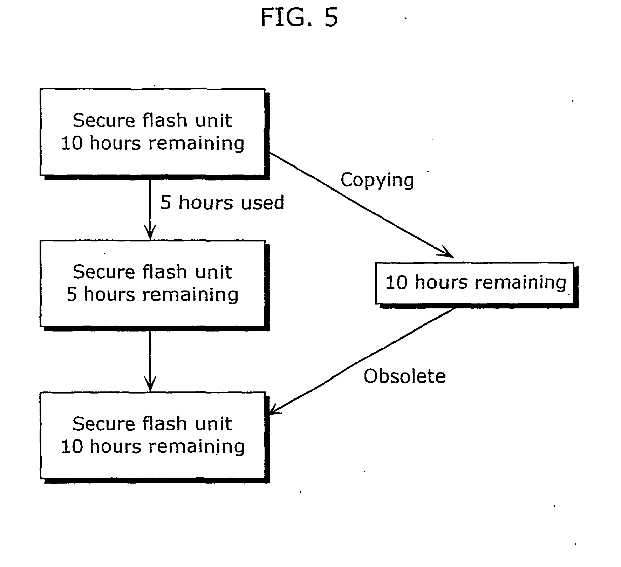

FIG. 5 is a diagram for explaining a state where the license ticket stored in the secure flash unit is rewritten without permission. As shown in FIG. 5, for example, in the case where a license ticket for admitting a reproduction of maximum "10 hours" is set for a content, if the content is reproduced for 5 hours, the remaining reproduction permitted time should be "5 hours". However, since the secure flash unit 120 is a general memory, it can arbitrary read and write so that it can copy data of the license ticket showing "10 hours" before the reproduction on the other memory area and can rewrite the data of the old license ticket again showing "10 hours" after the content is reproduced for 5 hours.

Here, in the present invention, it is explained about a content reproduction apparatus which holds a correspondence table of LT_ID to the number of update times of the license ticket inside the TRM and prevents the unauthorized activities, based on the correspondence table.

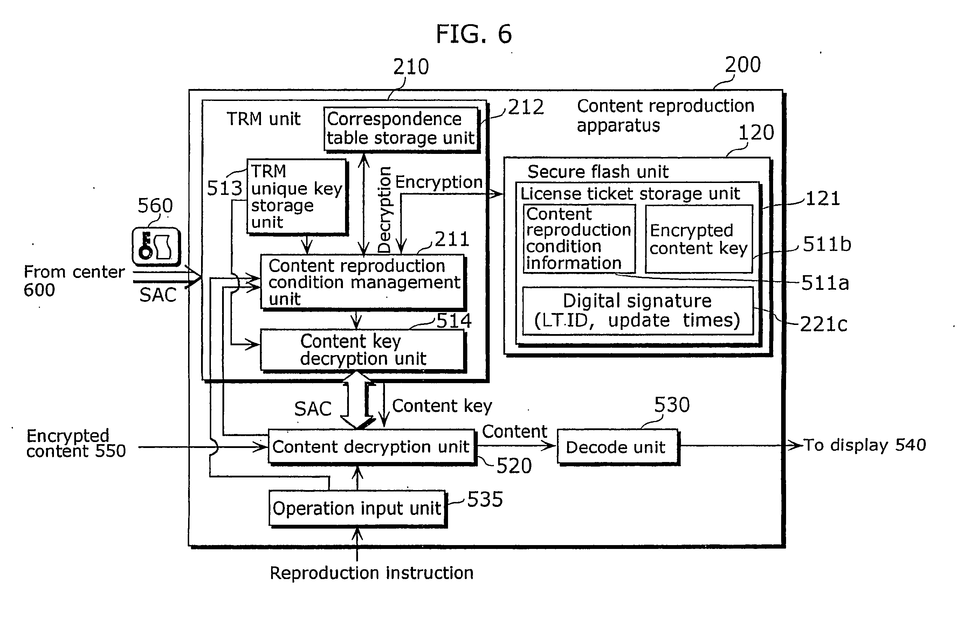

FIG. 6 is a block diagram showing a functional structure of the content reproduction apparatus 200 according to the present embodiment. Note that, in the content reproduction apparatus 200, same marks are attached to the same functional structures as in the content reproduction apparatus 100 in the first embodiment. In addition, the description about same structure is omitted in here.

As shown in FIG. 6, the TRM unit 210 of the content reproduction apparatus 200 further has a correspondence table storage unit 212 for storing the correspondence table. Furthermore, the content reproduction condition management unit 211 of the content reproduction apparatus 200 prevents unauthorized rewriting of the license ticket based on the correspondence table stored in the correspondence table storage unit 212.

Also, the secure flash unit 120 stores data 221c to which a digital signature for a concatenated data between the LT_ID and a number of update times of license ticket is newly applied.

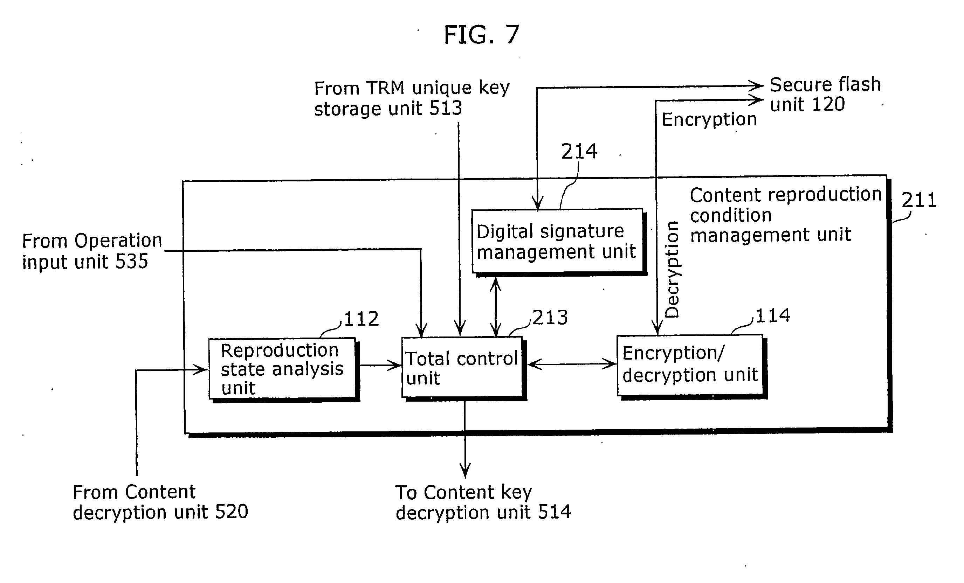

FIG. 7 is a block diagram showing a functional structure of the content reproduction condition management unit 211. As shown in FIG. 7, the content reproduction condition management unit 211 has a reproduction state analysis unit 112, a total control unit 213, an encryption/decryption unit 114 and a digital signature management unit 214.

The total control unit 213 is a section where controls the content reproduction condition management unit 211 as a whole. For example, it is a micro computer having a ROM and RAM. In addition to the function of the total control unit 113 in the first embodiment, the total control unit 213 controls the digital signature management unit 214. Further, the total control unit 213 creates information of a pair of the LT_ID and the number of update times (hereafter referred to as "concatenated information").

The digital signature management unit 214, based on an instruction from the total control unit 213, applies a digital signature to the concatenated information, stores into the secure flash unit 120, reads out the concatenated information stored in the secure flash unit 120 and verifies the validity. Here, conventional technology is used for a method of applying the digital signature and applying it.

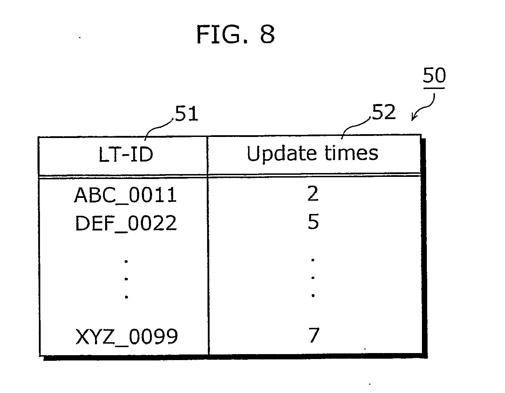

Hereafter, it is explained about a method used by the total control unit 213 for preventing the old license ticket from being rewritten based on the correspondence table with reference to the following FIG. 8.

FIG. 8 is an example of a correspondence table stored in the correspondence table storage unit 212. As shown in FIG. 8, the LT_IDs and the number of update times are associated with each other and stored in the correspondence table 50. Accordingly, if the total control unit 213 manages the license ticket (e.g. a license ticket called "ABC_0011") so as to increment the number of update times, it can verify whether or not the concatenated information is rewritten without permission by collating the concatenated information stored in the TRM unit 210 with the concatenated information stored in the secure flash unit 120.

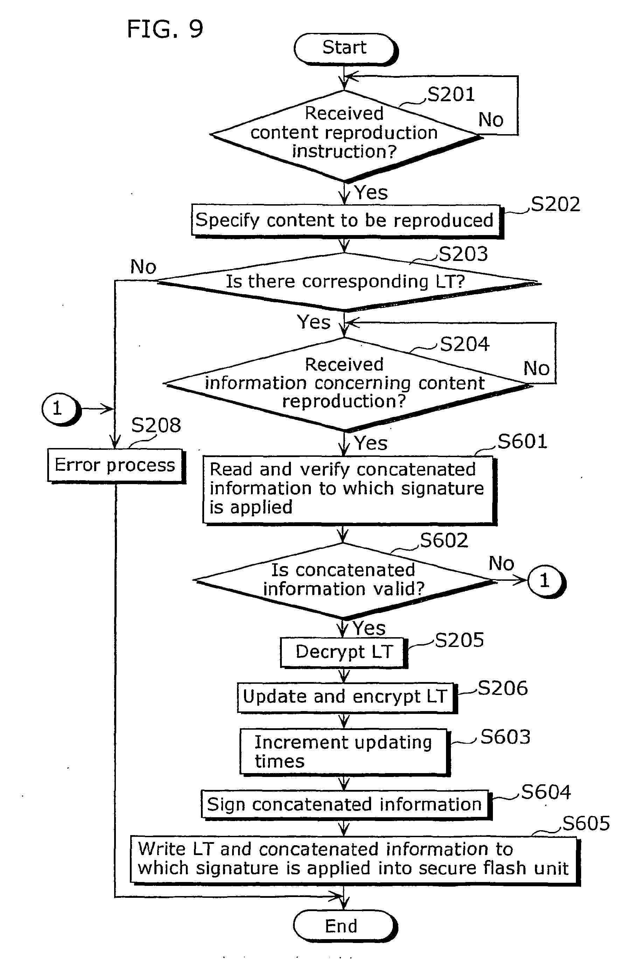

FIG. 9 is a flowchart showing a process of the content reproduction condition management unit 211 in the present embodiment. Here, same marks are attached to the same process shown in the flowchart of FIG. 4 in the first embodiment and the description about the same process is omitted.

First, the total control unit 213, similar to the case in the first embodiment, verifies the existence of the license ticket corresponding to the content according to the reproduction instruction (S203: Yes), when receiving information concerning the reproduction of the content from the content decryption unit 520 (S206: Yes), reads out the concatenated information to which the digital signature is applied, being stored in the secure flash unit 120, and instructs the digital signature management unit 214 to verify the validity using the TRM unique key (S601). Then, when the concatenated information is verified (S602: Yes), the total control unit 213 instructs the encryption/decryption unit 114 to decrypt the license ticket (S205).

Further, the total control unit 213 updates details of LT including the content reproduction condition information 511a and instructs the encryption/decryption unit 114 to re-encrypt the updated LT using the TRM unique key (S206). Furthermore, the total control unit 213 increments the number of update times (S603) and instructs the digital signature management unit 214 to apply the digital signature to the concatenated information (S604). It then instructs the encryption/decryption unit 114 and the digital signature management unit 214 so as to write the encrypted LT and the concatenated information to which the digital signature is applied (S605).

Here, in the second embodiment, the number of update times is used to explain as information to be associated with the LT_ID. However, it is not limited to the number of update times. It may be information such as random numbers that can identify an event which has performed update.

Also, in the second embodiment, it is explained as an example that the correspondence table is held in the TRM unit. However, the correspondence table may be also stored in the secure flash unit and hush value in the correspondence table may be held in the TRM unit. Furthermore, digital signature or hush value for each license ticket is stored in the secure flash unit, and the hush value may be stored in the TRM unit. Note that, the reproduction condition (e.g. validity period for reproduction) that is not necessary to be updated in the content reproduction condition information of the license ticket is not provided on the correspondence list. Instead, the memory storage may be reduced

As described in the above, according to the content reproduction apparatus in the present embodiment, while storing the license ticket into the secure flash unit, the validity of the license ticket is examined based on the correspondence table in which the information (LT_ID) which can identify the license ticket with the number of update times. Therefore, the storage memory of the TRM unit is restrained at minimum and the license ticket can be managed with higher security.

Further, in the first and second embodiments, the content decryption unit is set outside the TRM unit. However, it may be set inside the TRM unit.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

### Industrial Applicability

The license information management apparatus and the license information management method according to the present invention can be used for a reproduction apparatus of package contents such as a DVD reproduction apparatus which can reproduce encrypted content that requires a copyright protection, for a personal computer which receives and reproduces, via a network, the encrypted content, and the like.

## Claims

1. A license information management apparatus (200) operable to receive an encrypted digital content (550) with corresponding license information (LT) indicating a range in which the received digital content (550) can be used, the license information including an encrypted content key for decrypting the digital content, said apparatus comprising:
a data management unit (210) operable to manage the license information while ensuring security of the license information; and
a storage unit (120) operable to hold the license information whose security is ensured,
wherein said data management unit (210) includes:
a secret key holding subunit (513) operable to hold a secret key,
**characterized by** further comprising a reproduction condition management subunit (211) including:
a reading subunit (114) operable to read out the encrypted license information and the secret key respectively from said storage unit (120) and said secret key holding unit (513), the encrypted license information being encrypted with said secret key;
a decryption subunit (114) operable to decrypt the read license information;
an information update subunit (114) operable to update the decrypted license information in accordance with a use of digital content;
an overwriting subunit (114) operable to encrypt the updated license information with the secret key and overwrite in said storage unit (120);
a total control subunit (213) operable to create a correspondence table (50) associating identification information which can identify the license information with information indicating an update history of the license information, and to hold the created correspondence table; and
a digital signature management subunit (214) operable to:
apply a digital signature to the correspondence table created by said total control subunit (213), and store the correspondence table to which the digital signature is applied in said storage unit (120); and
verify validity of the digital signature by reading out the correspondence table to which the digital signature is applied stored in said storage unit (120), and collating the read-out correspondence table with the correspondence table stored in said total control subunit (213),
wherein said total control subunit (213) is operable to instruct said decryption subunit (114) to decrypt the license information, in the case where the validity of the digital signature is verified by said digital signature management subunit (214).

2. The license information management apparatus according to claim 1,
wherein the information indicating the update history indicates a number of updates or a random number,
said information update subunit (114) is further operable to update the information indicating the number of updates or the random number when updating the license information, and
said overwriting subunit (114) is further operable to overwrite the correspondence table concerning the information indicating the updated number of updates or the random number in said correspondence table storage subunit (120).

3. The license information management apparatus according to claim 2,
wherein said data management unit includes
an information judgement subunit operable to judge whether the license information is new or not, and
said reproduction condition management subunit is operable to perform the encryption and the overwriting of the license information which is judged as new.

4. The license information management apparatus according to claim 2,
wherein said data management unit is made up of an integrated circuit card, and
said storage unit is made up of a flash memory.

5. A license information management method for managing license information indicating a range in which a received encrypted digital content can be used, the license information including an encrypted content key for decrypting the digital content, the method comprising:
managing the license information while ensuring security of the license information,
wherein said managing includes
encrypting the license information with a secret key stored in a secret key holding unit, and overwriting the encrypted license information to a storage unit,
**characterized in that**
said encrypting and overwriting includes:
reading the encrypted license information and the secret key respectively from the storage unit and the secret key holding unit;
decrypting the read license information;
updating the decrypted license information in accordance with a use of digital content;
encrypting the updated license information with the secret key and overwriting in the storage unit;
creating a correspondence table associating identification information which can identify the license information with information indicating an update history of the license information, and holding the created correspondence table in a total control subunit;
applying a digital signature to the correspondence table and storing the correspondence table to which the digital signature is applied in the storage unit;
verifying validity of the license information by reading out the correspondence table to which the digital signature is applied stored in the storage unit, and collating the read-out correspondence table with the correspondence table stored in the total control subunit; and
decrypting the license information, in the case where the validity of the digital signature has been verified.

6. A computer executable program used for a license information management apparatus which manages license information indicating a range in which digital content can be used, the program, when loaded in a computer, allowing the computer to execute the steps of the license information management method according to claim 5.

## Patentansprüche

1. Lizenzinformationsverwaltungsvorrichtung (200), die zum Empfangen eines verschlüsselten digitalen Inhalts (550) mit entsprechender Lizenzinformation (LT), welche einen Bereich anzeigt, in dem der empfangene digitale Inhalt (550) benutzt werden kann, betriebsfähig ist, wobei die Lizenzinformation einen verschlüsselten Inhaltsschlüssel zum Entschlüsseln des digitalen Inhalts enthält, die Vorrichtung umfassend:
eine Datenverwaltungseinheit (210), die zum Verwalten der Lizenzinformation betriebsfähig ist, während die Sicherheit der Lizenzinformation gewährleistet ist;
eine Speichereinheit (120), die zum Enthalten der Lizenzinformation, deren Sicherheit gewährleistet ist, betriebsfähig ist;
wobei die Datenverwaltungseinheit (210) Folgendes enthält:
eine geheimschlüsselenthaltende Untereinheit (513), die zum Enthalten eines Geheimschlüssels betriebsfähig ist,
**dadurch gekennzeichnet, dass** sie ferner eine Wiedergabebedingungsverwaltungsuntereinheit umfasst (211), enthaltend:
eine Leseuntereinheit (114), die zum Auslesen der verschlüsselten Lizenzinformation und des Geheimschlüssels aus der Speichereinheit (120) bzw. der geheimschlüsselenthaltenden Einheit (513) betriebsfähig ist, wobei die verschlüsselte Lizenzinformation mit dem Geheimschlüssel verschlüsselt ist;
eine Entschlüsselungseinheit (114), die zum Entschlüsseln der gelesenen Lizenzinformation betriebsfähig ist;
eine Informationsaktualisierungsuntereinheit (114), die zum Aktualisieren der entschlüsselten Lizenzinformation gemäß einer Benutzung von digitalem Inhalt betriebsfähig ist;
eine Überschreibeuntereinheit (114), die zum Verschlüsseln der aktualisierten Lizenzinformation mit dem Geheimschlüssel und Überschreiben in die Speichereinheit (120) betriebsfähig ist;
eine Gesamtsteueruntereinheit (213), die zum Erstellen einer Entsprechungstabelle (50), die Identifikationsinformation zuordnet, welche die Lizenzinformation mit Information identifizieren kann, die eine Aktualisierungsgeschichte der Lizenzinformation anzeigt, und zum Enthalten der erstellten Entsprechungstabelle betriebsfähig ist; und
eine digitale Unterschriftsverwaltungsuntereinheit (214), die zu Folgendem betriebsfähig ist:
Anwenden einer digitalen Unterschrift auf die Entsprechungstabelle, die von der Gesamtsteueruntereinheit (213) erstellt ist, und Speichern der Entsprechungstabelle, auf die die digitale Unterschrift angewendet ist, in der Speichereinheit (120); und
Verifizieren der Gültigkeit der digitalen Unterschrift durch Auslesen der Entsprechungstabelle, auf die die digitale Unterschrift angewendet ist und die in der Speichereinheit (120) gespeichert ist, und Vereinen der ausgelesenen Entsprechungstabelle mit der Entsprechungstabelle, die in der Gesamtsteueruntereinheit (213) gespeichert ist,
wobei die Gesamtsteueruntereinheit (213) zum Anweisen der Entschlüsselungsuntereinheit (114) zum Entschlüsseln der Lizenzinformation betriebsfähig ist, falls die Gültigkeit der digitalen Unterschrift durch die digitale Unterschriftsverwaltungsuntereinheit (214) verifiziert ist.

2. Lizenzinformationsverwaltungsvorrichtung nach Anspruch 1,
wobei die Information, die die Aktualisierungsgeschichte anzeigt, eine Anzahl von Aktualisierungen oder eine Zufallszahl anzeigt,
wobei die Informationsaktualisierungseinheit (114) ferner beim Aktualisieren der Lizenzinformation zum Aktualisieren der Information betriebsfähig ist, die die Anzahl von Aktualisierungen oder die Zufallszahl anzeigt, und
die Überschreibeuntereinheit (114) ferner zum Überschreiben der Entsprechungstabelle, die die Information betrifft, welche die aktualisierte Anzahl von Aktualisierungen oder die Zufallszahl anzeigt, in die Entsprechungstabellenspeicheruntereinheit (120) betriebsfähig ist.

3. Lizenzinformationsverwaltungsvorrichtung nach Anspruch 2,
wobei die Datenverwaltungseinheit
eine Informationsbeurteilungsuntereinheit enthält, die zum Beurteilen, ob die Lizenzinformation neu ist oder nicht, betriebsfähig ist, und
die Wiedergabebedingungsverwaltungsuntereinheit zum Durchführen der Verschlüsselung und dem Überschreiben der Lizenzinformation, die als neu beurteilt ist, betriebsfähig ist.

4. Lizenzinformationsverwaltungsvorrichtung nach Anspruch 2,
wobei die Datenverwaltungseinheit aus einer IC-Karte gebildet ist und
die Speichereinheit aus einem Flash-Speicher gebildet ist.

5. Lizenzinformationsverwaltungsverfahren zum Verwalten von Lizenzinformation, die einen Bereich anzeigt, in dem ein empfangener digitaler Inhalt benutzt werden kann, wobei die Lizenzinformation einen verschlüsselten Inhaltsschlüssel zum Entschlüsseln des digitalen Inhalts enthält, das Verfahren umfassend:
Verwalten der Lizenzinformation, während die Sicherheit der Lizenzinformation gewährleistet wird,
wobei das Verwalten
das Verschlüsseln der Lizenzinformation mit einem Geheimschlüssel, der in einer geheimschlüsselenthaltenden Einheit gespeichert ist, und Überschreiben der verschlüsselten Lizenzinformation in eine Speichereinheit beinhaltet,
**dadurch gekennzeichnet, dass**
das Verschlüsseln und Überschreiben Folgendes beinhaltet:
Auslesen der verschlüsselten Lizenzinformation und des Geheimschlüssels aus der Speichereinheit bzw. der geheimschlüsselenthaltenden Einheit;
Entschlüsseln der ausgelesenen Lizenzinformation;
Aktualisieren der entschlüsselten Lizenzinformation gemäß einer Benutzung von digitalem Inhalt;
Verschlüsseln der aktualisierten Lizenzinformation mit dem Geheimschlüssel und Überschreiben in die Speichereinheit;
Erstellen einer Entsprechungstabelle, die Identifikationsinformation zuordnet, welche die Lizenzinformation mit Information identifizieren kann, die eine Aktualisierungsgeschichte der Lizenzinformation anzeigt, und Enthalten der erstellten Entsprechungstabelle in einer Gesamtsteueruntereinheit;
Anwenden einer digitalen Unterschrift auf die Entsprechungstabelle und Speichern der Entsprechungstabelle, auf die die digitale Unterschrift angewendet ist, in der Speichereinheit;
Verifizieren der Gültigkeit der digitalen Unterschrift durch Auslesen der Entsprechungstabelle, auf die die digitale Unterschrift angewendet ist und die in der Speichereinheit gespeichert ist, und Vereinen der ausgelesenen Entsprechungstabelle mit der Entsprechungstabelle, die in der Gesamtsteueruntereinheit gespeichert ist; und
Entschlüsseln der Lizenzinformation, falls die Gültigkeit der digitalen Unterschrift verifiziert wurde.

6. Rechnerausführbares Programm, das für eine Lizenzinformationsverwaltungsvorrichtung benutzt ist, die Lizenzinformation verwaltet, welche einen Bereich anzeigt, in dem digitaler Inhalt benutzt werden kann, wobei das Programm, wenn es in einem Rechner geladen ist, es dem Rechner ermöglicht, die Schritte des Lizenzinformationsverwaltungsverfahrens nach Anspruch 5 auszuführen.

## Revendications

1. Appareil (200) de gestion d'informations de licence pouvant fonctionner pour recevoir un contenu numérique crypté (550) avec des informations de licence correspondantes (LT) indiquant une plage dans laquelle le contenu numérique reçu (550) peut être utilisé, les informations de licence comportant une clé de contenu crypté pour décrypter le contenu numérique, ledit appareil comprenant :
une unité (210) de gestion de données pouvant fonctionner pour gérer les informations de licence tout en assurant la sécurité des informations de licence ; et
une unité (120) de stockage pouvant fonctionner pour contenir les informations de licence dont la sécurité est assurée,
où ladite unité (210) de gestion de données comporte :
une sous-unité (513) de maintien de clé secrète pouvant fonctionner pour contenir une clé secrète,
**caractérisé en ce qu'**il comprend en outre une sous-unité (211) de gestion de condition de reproduction comportant :
une sous-unité (114) de lecture pouvant fonctionner pour lire respectivement les informations de licence cryptées et la clé secrète à partir de ladite unité (120) de stockage et de ladite unité de maintien de clé secrète (513), les informations de licence cryptées étant cryptées avec ladite clé secrète ;
une sous-unité (114) de décryptage pouvant fonctionner pour décrypter les informations de licence lues ;
une sous-unité (114) de mise à jour d'informations pouvant fonctionner pour mettre à jour les informations de licence décryptées selon l'utilisation d'un contenu numérique ;
une sous-unité (114) d'écrasement pouvant fonctionner pour crypter les informations de licence mises à jour avec la clé secrète et pour les superposer par écrasement dans ladite unité (120) de stockage ;
une sous-unité (213) de commande totale pouvant fonctionner pour créer une table de correspondances (50) associant des informations d'identification qui peuvent identifier les informations de licence avec des informations indiquant un historique de mise à jour des informations de licence, et pour contenir la table de correspondances créée ; et
une sous-unité (214) de gestion de signature numérique pouvant fonctionner pour :
appliquer une signature numérique à la table de correspondances créée par ladite sous-unité (213) de commande totale, et pour stocker la table de correspondances à laquelle la signature numérique est appliquée dans ladite unité (120) de stockage, et
vérifier la validité de la signature numérique en lisant la table de correspondances à laquelle la signature numérique est appliquée stockée dans ladite unité (120) de stockage, et en collectant la table de correspondances lue avec la table de correspondances stockée dans ladite sous-unité (213) de commande totale,
dans lequel la sous-unité (213) de commande totale peut fonctionner pour donner une instruction à ladite sous-unité (114) de décryptage pour qu'elle décrypte les informations de licence, dans le cas où la validité de la signature numérique est vérifiée par ladite sous-unité (214) de gestion de signature numérique.

2. Appareil de gestion d'informations de licence selon la revendication 1,
dans lequel les informations indiquant l'historique de mise à jour indiquent un nombre de mises à jour ou un nombre aléatoire,
ladite sous-unité (114) de mise jour d'informations peut en outre fonctionner pour mettre à jour les informations indiquant le nombre de mises à jour ou le nombre aléatoire lors de la mise à jour des informations de licence, et
ladite sous-unité (114) d'écrasement peut en outre fonctionner pour écraser la table de correspondances concernant les informations indiquant le nombre de mises à jour ou le nombre aléatoire dans ladite sous-unité (120) de stockage de table de correspondances.

3. Appareil de gestion d'informations de licence selon la revendication 2, dans lequel ladite unité de gestion de données comporte
une sous-unité d'estimation d'informations pouvant fonctionner pour estimer si les informations de licence sont nouvelles ou non, et
ladite sous-unité de gestion de condition de reproduction peut fonctionner pour effectuer le cryptage et l'écrasement des informations de licence qui sont estimées comme étant nouvelles.

4. Appareil de gestion d'informations de licence selon la revendication 2,
dans lequel ladite unité de gestion de données est constituée d'une carte de circuit intégré, et
ladite unité de stockage est constituée d'une mémoire flash.

5. Procédé de gestion d'informations de licence destiné à gérer des informations de licence indiquant une plage dans laquelle un contenu numérique crypté reçu peut être utilisé, les informations de licence comportant une clé de contenu crypté pour décrypter le contenu numérique, le procédé comprenant le fait :
de gérer les informations de licence tout en assurant la sécurité des informations de licence,
dans lequel ladite étape de gestion comporte le fait
de crypter les informations de licence à l'aide d'une clé secrète stockée dans une unité de maintien de clé secrète, et de superposer par écrasement les informations de licence cryptées dans une unité de stockage,
**caractérisé en ce que**
lesdites étapes de cryptage et d'écrasement comportent le fait :
de lire respectivement les informations de licence cryptées et la clé secrète à partir de l'unité de stockage et de l'unité de maintien de clé secrète ;
de décrypter les informations de licence lues ;
de mettre à jour les informations de licence décryptées selon l'utilisation d'un contenu numérique ;
de crypter les informations de licence décryptées à l'aide de la clé secrète et de superposer par écrasement dans l'unité de stockage ;
de créer une table de correspondances associant des informations d'identification qui peuvent identifier les informations de licence avec des informations indiquant un historique de mise à jour des informations de licence, et de maintenir la table de correspondances créée dans une sous-unité de commande totale ;
d'appliquer une signature numérique à la table de correspondances et de stocker la table de correspondances à laquelle la signature numérique est appliquée dans l'unité de stockage ;
de vérifier la validité des informations de licence en lisant la table de correspondances à laquelle la signature numérique est appliquée stockée dans l'unité de stockage, et de collecter la table de correspondances lue avec la table de correspondances stockée dans la sous-unité de commande totale ; et
de décrypter les informations de licence, dans le cas où la validité de la signature digitale a été vérifiée.

6. Programme exécutable par ordinateur utilisé pour un appareil de gestion d'informations de licence qui gère les informations de licence indiquant une plage dans laquelle un contenu numérique peut être utilisé, le programme, lorsqu'il est chargé dans un ordinateur, permet à l'ordinateur de mettre en oeuvre les étapes du procédé de gestion d'informations de licence selon la revendication 5.
